# EUROPÄISCHE PATENTANMELDUNG

(11) **EP 4 325 312 A1**
(43) Veröffentlichungstag der Anmeldung: **21.02.2024**
(21) Anmeldenummer: 23191356.7
(22) Anmeldetag: 14.08.2023
(51) Int. Cl.: G05B 19/423

(54) **VERFAHREN ZU EINEM ANLERNEN EINER PLANAREN TRANSPORTVORRICHTUNG, PLANARE TRANSPORTVORRICHTUNG, DIE MIT EINEM DERARTIGEN VERFAHREN ANLERNBAR IST, SOWIE PRODUKTIONS- UND/ODER TRANSPORTMASCHINE MIT EINER DERARTIGEN PLANAREN TRANSPORTVORRICHTUNG**

(30) Priorität: 16.08.2022 DE 102022120633
(71) Anmelder: Syntegon Technology GmbH, 71332 Waiblingen (DE)
(72) Erfinder: Schwarz, Sebastian, 91616 Neusitz (DE); Kleinert, Marcus, 74599 Wallhausen (DE); Täger, Maik, 74579 Fichtenau (DE); Polzin, Florian, 74599 Wallhausen (DE)
(74) Vertreter: Daub, Thomas

(57) **Zusammenfassung**

Die Erfindung geht aus von einem Verfahren zu einem Anlernen einer planaren Transportvorrichtung, wobei ein Betriebsverhalten zumindest eines als elektrodynamisch beweglicher Mover ausgebildeten Handhabungselements (14 der planaren Transportvorrichtung, das zu einem Handhaben von Produkten (16) vorgesehen ist, mittels einer, insbesondere verschieden von einem manuellen Schreiben eines Programmierbefehls ausgebildeten, Bedienerinteraktion eines Bedieners angelernt wird.

Es wird vorgeschlagen, dass die Bedienerinteraktion direkt, vorzugsweise frei von einem zusätzlichen Bedienereingabegerät, am Handhabungselement (14) erfolgt, um das Betriebsverhalten des Handhabungselements (14) vorzugeben.

## Beschreibung

### Stand der Technik

Die Erfindung betrifft ein Verfahren zu einem Anlernen einer planaren Transportvorrichtung, eine planare Transportvorrichtung, die mittels des Verfahrens anlernbar ist, sowie eine Produktions- und/oder Transportmaschine mit einer derartigen planaren Transportvorrichtung

Verfahren zu einem Anlernen von Handhabungsvorrichtungen sind bereits bekannt, wie beispielsweise aus DE 10 2021 107 532 A1, DE 10 2020 006 839 A1, DE 10 2019 134 794 B4, DE 10 2019 001 207 A1, DE 11 2018 002 565 B4. Ferner ist beispielsweise von dem Unternehmen Wandelbots GmbH bereits ein Verfahren bekannt, bei dem mittels eines separaten Anlernwerkzeugs - einem so genannten TracePen - eine Handhabungsvorrichtung angelernt wird, indem Bedienerinteraktionen eines Bedieners über das separate Anlernwerkzeug erfasst werden und in ein Betriebsverhalten der Handhabungsvorrichtung umgewandelt werden. Die Bedienerinteraktionen werden nicht direkt an der Handhabungsvorrichtung ausgeführt, um das Betriebsverhalten der Handhabungsvorrichtung vorzugeben, wodurch es zu, insbesondere unerwünschten, Abweichungen und Ungenauigkeiten zwischen der Bedienerinteraktion und dem daraus abgeleiteten Betriebsverhalten kommen kann.

Aus DE 20 2021 103 637 U1 ist zudem bereits ein Verfahren zu einem Anlernen einer Handhabungsvorrichtung in der Form eines Industrieroboters bekannt, wobei ein Betriebsverhalten zumindest eines Handhabungselements der Handhabungsvorrichtung, insbesondere eines Kopfs und Klemmbacken des Industrieroboters, das bzw. die zu einem Handhaben von Produkten vorgesehen ist bzw. sind, mittels einer, insbesondere verschieden von einem manuellen Schreiben eines Programmierbefehls ausgebildeten, Bedienerinteraktion eines Bedieners angelernt wird. Die Bedienerinteraktion erfolgt, insbesondere direkt, vorzugsweise frei von einem zusätzlichen Bedienereingabegerät, am Handhabungselement, um das Betriebsverhalten des Handhabungselements vorzugeben.

Die Aufgabe der Erfindung besteht insbesondere darin, ein gattungsgemäßes Verfahren, eine gattungsgemäße planare Transportvorrichtung und/oder eine gattungsgemäße Produktions- und/oder Transportmaschine mit verbesserten Eigenschaften hinsichtlich einer Präzision und eines Bedienerkomforts, bereitzustellen. Die Aufgabe wird erfindungsgemäß durch die Merkmale des Anspruchs 1, des Anspruchs 8 bzw. des Anspruchs 10 gelöst, während vorteilhafte Ausgestaltungen und Weiterbildungen der Erfindung den Unteransprüchen entnommen werden können.

### Offenbarung der Erfindung

Die Erfindung geht aus von einem Verfahren zu einem Anlernen einer planaren Transportvorrichtung, wobei ein Betriebsverhalten zumindest eines als elektrodynamisch beweglicher Mover ausgebildeten Handhabungselements der planaren Transportvorrichtung, das zu einem Handhaben von Produkten vorgesehen ist, mittels einer, insbesondere verschieden von einem manuellen Schreiben eines Programmierbefehls ausgebildeten, Bedienerinteraktion eines Bedieners angelernt wird.

Es wird vorgeschlagen, dass die Bedienerinteraktion direkt, vorzugsweise frei von einem zusätzlichen Bedienereingabegerät, am Handhabungselement erfolgt, um das Betriebsverhalten des Handhabungselements vorzugeben. Mittels der erfindungsgemäßen Ausgestaltung kann vorteilhaft ein bedienerfreundliches Anlernverfahren von einem oder mehreren Handhabungselement/en einer als planare Transportvorrichtung ausgebildeten Handhabungsvorrichtung erreicht werden. Ein Bediener kann vorteilhaft Bewegungsabläufe oder Bewegungsstrecken des Handhabungselements einfach und schnell an dem Handhabungselement selbst vorgeben, insbesondere ohne spezielle Programmierfähigkeiten dafür haben zu müssen. Es kann vorteilhaft ein intuitiv durchzuführendes Anlernverfahren ermöglicht werden. Es kann vorteilhaft eine einfache Anpassbarkeit des Betriebsverhaltens des Handhabungselements erreicht werden. Insbesondere können vorteilhaft während eines laufenden Betriebs einfach und schnell Anpassungen des Betriebsverhaltens des Handhabungselements ermöglicht werden, da beispielsweise ein Bediener bei einem Erkennen einer unerwünschten Aktion des Handhabungselements direkt das Betriebsverhalten des Handhabungselements durch eine direkte Bedienerinteraktion ändern kann.

Die Handhabungsvorrichtung ist vorzugsweise als planare Transportvorrichtung ausgebildet, die insbesondere eine elektrodynamische Fördereinheit umfasst. Es ist jedoch auch denkbar, dass die Handhabungsvorrichtung eine andere, einem Fachmann als sinnvoll erscheinende Ausgestaltung aufweist, wie beispielsweise eine Ausgestaltung als Robotervorrichtung, die zumindest einen mehrachsigen Roboterarm aufweist, als autonome Transportfahrzeugvorrichtung, die zumindest ein sich autonom fortbewegendes Transportfahrzeug aufweist, o. dgl. Bevorzugt weist die als planare Transportvorrichtung ausgebildete Handhabungsvorrichtung eine zumindest im Wesentlichen, einem Fachmann bereits bekannte Ausgestaltung auf. Die Handhabungsvorrichtung umfasst bevorzugt eine Vielzahl, insbesondere horizontal ausgerichteter, Bewegungsflächenelemente, die mit elektromagnetischen Antriebseinheiten ausgestattet sind und miteinander verbunden sind, insbesondere um zusammen eine planare Bewegungsebene zu bilden. Die Handhabungsvorrichtung umfasst vorzugsweise eine Vielzahl an, insbesondere relativ zu den Bewegungsflächenelementen beweglichen, Handhabungselementen. Die Handhabungselemente sind bevorzugt als Mover ausgebildet, die relativ zu den Bewegungsflächenelementen, insbesondere kontaktlos, beweglich sind, insbesondere infolge eines Zusammenwirkens von Permanentmagneten der Mover mit den elektromagnetischen Antriebseinheiten der Bewegungsflächenelemente. Vorzugsweise bilden die Permanentmagnete der Mover und die elektromagnetischen Antriebseinheiten zusammen die elektrodynamische Fördereinheit oder sind zumindest Teil von der elektrodynamischen Fördereinheit. Insbesondere kann die als planare Transportvorrichtung ausgebildete Handhabungsvorrichtung auf eine, einem Fachmann bereits bekannte Art und Weise eine Position der einzelnen Mover relativ zu den Bewegungsflächenelementen erfassen und auswerten, um eine Steuerung oder Regelung einer Bewegung der Mover zu realisieren. Hinsichtlich einer grundsätzlichen Funktionsweise und einer grundsätzlichen Ausgestaltung der als planare Transportvorrichtung ausgebildeten Handhabungsvorrichtung wird beispielsweise auf das Produkt XPlanar der Firma Beckhoff Automation GmbH & Co. KG oder auf das Produkt XBot^{®} der Firma Planar Motor Inc. verwiesen.

Das Betriebsverhalten des Handhabungselements oder der Handhabungselemente stellt bevorzugt ein Verhalten des Handhabungselements oder der Handhabungselemente während eines regulären Betriebs der Handhabungsvorrichtung dar, in dem Produkte mittels des Handhabungselements oder der Handhabungselemente gehandhabt werden. Ein Handhaben von Produkten kann bspw. ein Transport, ein Bearbeiten, ein Wiegen, ein Messen o. dgl. von Produkten sein. Mittels des Movers oder mittels den Movern der als planare Transportvorrichtung ausgebildeten Handhabungsvorrichtung können Produkte besonders flexibel gehandhabt werden. Zu einem Handhaben von Produkten ist vorzugsweise an jedem Mover zumindest eine Produktaufnahmeeinheit angeordnet. Alternativ oder zusätzlich bildet eine in einem Betrieb der Handhabungsvorrichtung dem Bewegungsflächenelement abgewandte Oberfläche des Movers eine Produktauflagefläche, an der handzuhabende Produkte anordenbar sind. Bevorzugt ist die Handhabungsvorrichtung zu einem Transport von Produkten vorgesehen. Beispielsweise ist denkbar, dass die Handhabungsvorrichtung zu einem Transport von Produkten zwischen einzelnen Arbeitsstationen einer die Handhabungsvorrichtung umfassenden Produktions- und/oder Transportmaschine vorgesehen ist. Die Handhabungsvorrichtung kann zu einem geordneten Transport, wie beispielsweise zu einer Realisierung einer Reihenbildung o. dgl., und/oder zu einem ungeordneten Transport vorgesehen sein. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Des Weiteren wird vorgeschlagen, dass ein, insbesondere manuelles, vorzugsweise durch den Bediener durchgeführtes, Bewegen des Handhabungselements entlang eines Bewegungspfads und/oder um eine Bewegungsachse, insbesondere des Handhabungselements, mittels einer, insbesondere zumindest teilweise an dem Handhabungselement angeordneten, Sensoreinheit der Handhabungsvorrichtung erfasst wird und mittels einer Steuer- oder Regeleinheit der Handhabungsvorrichtung in einen elektronischen Befehl umgewandelt wird, der als Teil eines Betriebsprogramms zu einer Steuerung oder einer Regelung des Betriebsverhaltens des Handhabungselements in einer Speichereinheit der Steuer- oder Regeleinheit gespeichert wird. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise wird das Handhabungselement direkt durch den Bediener bewegt, insbesondere dadurch, dass der Bediener das Handhabungselement mittels einer Extremität des Bedieners, insbesondere einer Hand oder eines Fingers, bewegt, insbesondere relativ zum Bewegungsflächenelement, vorzugsweise schiebt, zieht, dreht, anhebt und/oder herunterdrückt. Bevorzugt ist die Bedienerinteraktion zu einer Vorgabe des Betriebsverhaltens ein Bewegen des Handhabungselements relativ zu den Bewegungsflächenelementen durch den Bediener, wobei der Bediener bevorzugt das Handhabungselement direkt oder indirekt, insbesondere über ein Zusatzelement, berührt. Beispielsweise wird/werden, insbesondere in einem Anlernprozess, eine Bewegung und/oder ein Bewegungsablauf des Handhabungselements, welche/welchen das Handhabungselement während eines regulären Betriebs durchführt, mittels eines aktiven Bewegens des Handhabungselements durch den Bediener relativ zu den Bewegungsflächenelementen angelernt. Der Bediener kann, insbesondere im Anlernprozess, beispielsweise durch ein Bewegen, insbesondere ein Schieben oder Ziehen, des Handhabungselements einen Bewegungspfad des Handhabungselements vorgeben, den das Handhabungselement während eines regulären Betriebs abfährt. Beispielsweise kann der Bediener, insbesondere im Anlernprozess, durch ein Drehen des Handhabungselements um die Bewegungsachse eine Geschwindigkeit des Handhabungselements vorgeben, mit welcher das Handhabungselement während eines regulären Betriebs sich entlang des vorgegebenen Bewegungspfads bewegt. Es ist auch denkbar, dass durch ein, insbesondere seitliches, vorzugsweise zumindest im Wesentlichen parallel zu einer Horizontalebene und/oder einer Oberfläche des Handhabungselements und/oder der Bewegungsflächenelemente ausgerichtetes, Antippen des Handhabungselements durch den Bediener eine Feinjustierung des Bewegungspfads oder der Geschwindigkeit erfolgen kann. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise kontaktiert der Bediener direkt das Handhabungselement, um das Handhabungselement zu einer Vorgabe eines Betriebsverhaltens zu bewegen, insbesondere relativ zum Bewegungsflächenelement zu schieben, zu ziehen, zu drehen, anzuheben und/oder herunterzudrücken. Vorzugsweise entspricht die Bedienerinteraktion zu einer Vorgabe eines Betriebsverhaltens einem Schieben, einem Ziehen, einem Drehen, einem Anheben und/oder einem Herunterdrücken des Handhabungselements durch den Bediener. Es ist denkbar, dass zu einem Bewegen des Handhabungselements das am Handhabungselement anordenbare Zusatzelement, wie beispielsweise eine Art Griff, Führungsstange o. dgl. genutzt wird. Das Zusatzelement kann zu einem vorteilhaften Greifen und/oder Führen des Handhabungselements während des Anlernprozesses genutzt werden. Bevorzugt ist das Zusatzelement in einem regulären Betrieb nicht an dem Handhabungselement angeordnet. Das Handhabungselement kann eine Verbindungsschnittstelle aufweisen, die zu einer lösbaren mechanischen Verbindung mit dem Zusatzelement vorgesehen ist. Die Verbindungsschnittstelle kann als Steckverbindung, als Schraubverbindung, als Klemmverbindung, als Klettverbindung, als Bajonettverbindung oder als sonstige, einem Fachmann als sinnvoll erscheinende Verbindungsschnittstelle ausgebildet sein. Vorzugsweise ist die Verbindungsschnittstelle frei von elektronischen und/oder elektrischen Kontakten ausgebildet. Die Verbindungsschnittstelle kann teilweise oder vollständig von der Produktaufnahmeeinheit gebildet sein oder zusätzlich zu dieser am Handhabungselement angeordnet sein. Es ist jedoch auch denkbar, dass das Zusatzelement verstaubar an dem Handhabungselement angeordnet ist, wie beispielsweise infolge einer beweglichen Lagerung des Zusatzelements am Handhabungselement. Das Zusatzelement kann beispielsweise klappbar, schwenkbar, einfahrbar o. dgl. am Handhabungselement beweglich gelagert sein. Bevorzugt wird eine als manuelles Bewegen des Movers ausgebildete Bedienerinteraktion mittels der Sensoreinheit der Handhabungsvorrichtung erfasst, vorzugsweise interpoliert, und, insbesondere anschließend an die Interpolation, als Programmbefehl/Betriebsbefehl in der Speichereinheit der Steuer- oder Regeleinheit abgelegt. Vorzugsweise bilden die Permanentmagnete der Handhabungselemente zusammen mit den elektromagnetischen Antriebseinheiten der Bewegungsflächenelemente einen Teil der Sensoreinheit. Bevorzugt bildet ein Teil der Steuer- oder Regeleinheit die Sensoreinheit, insbesondere der Teil der Steuer- oder Regeleinheit, der eine Änderung im Magnetfeld zwischen Handhabungselementen und den Bewegungsflächenelementen auswertet, um eine Position des Handhabungselement relativ zu dem Bewegungsflächenelement, insbesondere zu einer Vielzahl der Bewegungsflächenelemente, zu bestimmen. Es ist jedoch alternativ oder zusätzlich denkbar, dass die Sensoreinheit ein Sensorelement aufweist, das zu einer speziellen Erfassung von Positionsdaten ausgebildet ist, wie beispielsweise ein Beschleunigungssensor, ein Drehratensensor o. dgl. Mittels der erfindungsgemäßen Ausgestaltung können vorteilhaft individuelle Bewegungspfade der Handhabungselemente vorgegeben werden, die bedienerfreundlich vorgegeben werden können, insbesondere ohne spezielle Programmierfähigkeiten aufweisen zu müssen. Es kann vorteilhaft infolge der Erfassung der Bewegung mittels der Sensoreinheit, insbesondere direkt an dem Handhabungselement, ein besonders präzises Anlernen ermöglicht werden. Es kann vorteilhaft ein bedienerfreundliches Anlernverfahren von einem oder mehreren Handhabungselement/en der Handhabungsvorrichtung erreicht werden.

Ferner wird vorgeschlagen, dass ein, insbesondere manuelles, vorzugsweise durch den Bediener durchgeführtes, Bewegen des Handhabungselements entlang eines Bewegungspfads und/oder um eine Bewegungsachse mittels einer, insbesondere zumindest teilweise an dem Handhabungselement angeordneten, insbesondere der zuvor bereits genannten, Sensoreinheit der Handhabungsvorrichtung erfasst wird und mittels einer, insbesondere der zuvor bereits genannten, Steuer- oder Regeleinheit der Handhabungsvorrichtung, insbesondere vor einem Speichern als Teil eines Betriebsprogramms in einer, insbesondere der zuvor bereits genannten, Speichereinheit der Steuer- oder Regeleinheit, interpoliert wird. Die Steuer- oder Regeleinheit ist vorzugsweise dazu eingerichtet, Abweichungen in vorgegebenen Bewegungspfaden, die beispielsweise durch ein Zittern des Bedieners während eines Bewegens des Handhabungselements o. dgl. erfasst werden, vor einem Speichern des Bewegungspfads auszugleichen. Beispielsweise glättet die Steuer- oder Regeleinheit einen zittrigen Verlauf eines hauptsächlich als Gerade erfassten Bewegungspfads oder einen zittrigen Verlauf eines hauptsächlich als Bogen oder Kurve erfassten Bewegungspfads automatisch. Weitere, einem Fachmann als sinnvoll erscheinende Optimierungen der erfassten Bewegungspfade sind ebenfalls denkbar. Mittels der erfindungsgemäßen Ausgestaltung kann vorteilhaft ein besonders präzises Anlernen ermöglicht werden. Es können vorteilhaft einfach, insbesondere automatisch, ungewünschte Ungenauigkeiten in Bewegungspfaden ausgeglichen werden.

Des Weiteren wird vorgeschlagen, dass durch ein, insbesondere manuelles, vorzugsweise durch den Bediener durchgeführtes, Bewegen des Handhabungselements, insbesondere entlang einer Vertikalrichtung, relativ zu einem, insbesondere zumindest eine elektromagnetische Antriebseinheit umfassenden, Bewegungsflächenelement, insbesondere des bereits zuvor genannten Bewegungsflächenelements, der Handhabungsvorrichtung ein Anlernprozess gestartet oder beendet wird. Es ist denkbar, dass der Bediener das Handhabungselement als Ganzes entlang der Vertikalrichtung bewegt, um den Anlernprozess zu starten oder zu beenden, oder dass der Bediener das Handhabungselement lediglich in einem Randbereich des Handhabungselements entlang der Vertikalrichtung bewegt, um den Anlernprozess zu starten oder zu beenden. Bei einem Bewegen lediglich eines Randbereichs des Handhabungselements entlang der Vertikalrichtung wird das Handhabungselement vorzugsweise infolge der Bewegung um eine zumindest im Wesentlichen parallel zur Horizontalebene verlaufende Achse verkippt. Das Handhabungselement kann bevorzugt eine Funktion einer Art Bedientaster übernehmen. Bevorzugt wird ein Bewegen des Handhabungselements entlang der Vertikalrichtung mittels der Sensoreinheit erfasst und von der Steuer- oder Regeleinheit verarbeitet oder ausgewertet. Mittels der erfindungsgemäßen Ausgestaltung kann vorteilhaft ein bedienerfreundliches Anlernverfahren von einem oder mehreren Handhabungselement/en der Handhabungsvorrichtung erreicht werden. Es kann vorteilhaft ein Anlernverfahren ohne zusätzliche Eingabegeräte realisiert werden, insbesondere da weitestgehend alle Bedienerinteraktionen direkt am Handhabungselement durchführbar sind. Es kann vorteilhaft ein intuitiv durchzuführendes Anlernverfahren ermöglicht werden.

Weiterhin wird vorgeschlagen, dass zu einer Erfassung von Positionsdaten des Handhabungselements, die zu einer Erfassung eines Bewegungspfads des Handhabungselements genutzt werden, eine Änderung in einem Magnetfeld, insbesondere in einem elektromagnetischen Feld, ausgewertet wird. Bevorzugt erfolgt die Auswertung einer Änderung im Magnetfeld durch die Steuer- oder Regeleinheit. Vorzugsweise wird der so genannte AM R-Effekt (anisotrope magnetoresistive Effekt) genutzt, um die Positionsdaten anhand der Änderung im Magnetfeld zu erfassen. Vorzugsweise wird das mittels der elektromagnetischen Antriebseinheiten der Bewegungsflächenelemente erzeugte Magnetfeld infolge einer Relativbewegung der Handhabungselemente, die jeweils einen Permanentmagneten umfassen, geändert. Das mittels der elektromagnetischen Antriebseinheiten der Bewegungsflächenelemente erzeugte Magnetfeld wird bevorzugt von der Steuer- oder Regeleinheit, insbesondere auf eine, einem Fachmann bereits bekannte Art und Weise, geregelt, insbesondere überwacht. Mittels der erfindungsgemäßen Ausgestaltung kann vorteilhaft eine präzise Positionserfassung realisiert werden. Es können bereits vorhandene Bauteile der Handhabungsvorrichtung vorteilhaft zu einer Positionsbestimmung und somit zu einer Bewegungspfaderfassung genutzt werden, um ein einfaches Anlernverfahren zu realisieren.

Des Weiteren wird vorgeschlagen, dass eine während einer, insbesondere nach einem Anlernprozess erfolgte, Bewegung des Handhabungselements entlang eines Bewegungspfads auf das Handhabungselement wirkende Kraft, insbesondere mittels einer zumindest teilweise am Handhabungselement angeordneten, vorzugsweise der bereits zuvor genannten, Sensoreinheit der Handhabungsvorrichtung, erfasst wird, um eine Anwesenheit eines Hindernisses auf dem Bewegungspfad zu beurteilen, wobei bei einem Überschreiten von einem Grenzwert der auf das Handhabungselement einwirkenden Kraft automatisch, insbesondere aktuelle, Positionsdaten des Handhabungselements in einer Speichereinheit einer Steuer- oder Regeleinheit der Handhabungsvorrichtung hinterlegt werden, insbesondere um eine Position des Hindernisses zu vermerken. Die Sensoreinheit umfasst vorzugsweise zumindest ein Krafterfassungselement, um eine auf das Handhabungselement wirkende Kraft zu erfassen. Bevorzugt ist das Krafterfassungselement an einem, vorzugsweise umlaufenden, Rand des Handhabungselements angeordnet, um bei einem Kontakt des Handhabungselements mit einem Hindernis, eine auf das Handhabungselement wirkende Kraft zu erfassen. Das Krafterfassungselement kann jegliche, einem Fachmann als sinnvoll erscheinende Ausgestaltungen aufweisen, wie beispielsweise eine Ausgestaltung als Dehnmessstreifen, als piezoelektrischer Sensor, als Dünnfilmsensor, als induktiver Sensor, als kapazitiver Sensor o. dgl. Denkbar ist, dass ein, betrachtet in der Horizontalebene, das Handhabungselement, insbesondere vollständig, umgebender Rand des Handhabungselement elastisch ausgebildet oder beweglich gelagert ist und mittels des Krafterfassungselement eine, insbesondere elastische, Verformung oder eine Auslenkung des Rands erfassbar ist, um eine auf das Handhabungselement einwirkende Kraft zu erfassen. Weitere, einem Fachmann als sinnvoll erscheinende Ausgestaltungen zu einer Erfassung einer auf das Handhabungselement wirkenden Kraft zu einer Hinderniserkennung sind ebenfalls denkbar. Mittels der erfindungsgemäßen Ausgestaltung kann vorteilhaft ein sich im Bewegungspfad befindliches Hindernis zuverlässig erfasst werden. Es kann dem Bediener vorteilhaft eine Information in Bezug auf ein Hindernis ausgegeben werden, so dass dieser das Hindernis beseitigen kann oder eine Änderung eines Bewegungspfads einleiten kann. Es kann vorteilhaft eine einfache Anpassbarkeit des Betriebsverhaltens des Handhabungselements erreicht werden. Insbesondere können vorteilhaft während eines laufenden Betriebs einfach und schnell Anpassungen des Betriebsverhaltens des Handhabungselements ermöglicht werden, da beispielsweise ein Bediener bei einem Erkennen einer unerwünschten Aktion des Handhabungselements direkt das Betriebsverhalten des Handhabungselements durch eine direkte Bedienerinteraktion ändern kann. Es kann vorteilhaft eine hohe Zuverlässigkeit einer Bewegung der Handhabungselemente ermöglicht werden.

Des Weiteren wird vorgeschlagen, dass eine, insbesondere erfolgreich erfasste, Bedienerinteraktion zu einem Anlernen des Betriebsverhaltens des Handhabungselements durch das Handhabungselement mittels einer optischen und/oder haptischen Ausgabe, insbesondere durch eine Bewegung, vorzugsweise ein Vibrieren, des Handhabungselements, bestätigt wird. Die optische und/oder haptische Ausgabe kann beispielsweise ein Vibrieren, ein Neigen, ein Drehen, ein Abfahren eines Bestätigungspfads durch das Handhabungselement sein oder eine Ausgabe eines Lichtsignals, eine Ausgabe einer Projektion, insbesondere auf zumindest eine Bewegungsflächenelement, o. dgl. sein. Das Handhabungselement kann beispielsweise zu einer Ausgabe eines Lichtsignals und/oder einer Projektion eine Lichtquelle aufweisen, wie beispielsweise eine LED, einen Projektor o. dgl. Alternativ oder zusätzlich ist denkbar, dass das Handhabungselement ein akustisches Ausgabeelement aufweist, das dazu vorgesehen ist, eine, insbesondere erfolgreich erfasste, Bedienerinteraktion zu einem Anlernen des Betriebsverhaltens des Handhabungselements durch ein akustisches Signal zu bestätigen. Mittels der erfindungsgemäßen Ausgestaltung kann besonders vorteilhaft ein hoher Bedienkomfort erreicht werden, insbesondere da vorteilhaft eine Rückmeldung des Handhabungselements an den Bediener erfolgen kann. Es kann vorteilhaft eine hohe Akzeptanz des unabhängig von einem zusätzlichen Eingabegerät ausgebildeten Verfahrens erreicht werden.

Zudem wird eine, insbesondere die bereits zuvor genannte, als eine planare Transportvorrichtung ausgebildete Handhabungsvorrichtung mit zumindest einem als elektrodynamisch beweglicher Mover ausgebildeten Handhabungselement und mit zumindest einer, insbesondere die bereits zuvor genannte, Steuer- oder Regeleinheit, die dazu vorgesehen ist, zumindest ein Betriebsverhalten des Handhabungselements mittels eines erfindungsgemäßen Verfahrens anzulernen, vorgeschlagen. Mittels der erfindungsgemäßen Ausgestaltung kann vorteilhaft eine als eine planare Transportvorrichtung ausgebildete Handhabungsvorrichtung realisiert werden, die besonders bedienerfreundlich anlernbar ist. Ein Bediener kann vorteilhaft Bewegungsabläufe oder Bewegungsstrecken des Handhabungselements einfach und schnell, insbesondere direkt, an dem Handhabungselement selbst vorgeben, insbesondere ohne spezielle Programmierfähigkeiten dafür haben zu müssen. Es kann vorteilhaft ein intuitiv durchzuführendes Anlernverfahren ermöglicht werden.

Des Weiteren wird vorgeschlagen, dass die als eine planare Transportvorrichtung ausgebildete Handhabungsvorrichtung zumindest ein, insbesondere zumindest eine elektromagnetische Antriebseinheit umfassendes, Bewegungsflächenelement, insbesondere das bereits zuvor genannte Bewegungsflächenelement, und zumindest eine, insbesondere die bereits zuvor genannte, Sensoreinheit zumindest zu einer Erfassung einer Position und/oder einer Bewegung des Handhabungselements relativ zum Bewegungsflächenelement umfasst. Mittels der erfindungsgemäßen Ausgestaltung kann vorteilhaft eine als eine planare Transportvorrichtung ausgebildete Handhabungsvorrichtung realisiert werden, die konstruktiv einfach ein präzises Anlernverfahren ermöglicht. Es können bereits vorhandene Bauteile der als eine planare Transportvorrichtung ausgebildeten Handhabungsvorrichtung vorteilhaft zu einer Positionsbestimmung und somit zu einer Bewegungspfaderfassung genutzt werden, um ein einfaches Anlernverfahren zu realisieren. Ein Bediener kann vorteilhaft Bewegungsabläufe oder Bewegungsstrecken des Handhabungselements einfach und schnell, insbesondere direkt, an dem Handhabungselement selbst vorgeben, insbesondere ohne spezielle Programmierfähigkeiten dafür haben zu müssen. Es kann vorteilhaft ein intuitiv durchzuführendes Anlernverfahren ermöglicht werden.

Ferner wird eine Produktions- und/oder Transportmaschine mit zumindest einer erfindungsgemäßen als eine planare Transportvorrichtung ausgebildeten Handhabungsvorrichtung vorgeschlagen. Die Produktions- und/oder Transportmaschine kann weitere, einem Fachmann als sinnvoll erscheinende Vorrichtungen und/oder Einheiten umfassen, die zu einer Handhabung von Produkten, insbesondere von Lebensmitteln, nutzbar sind. Die Produktions- und/oder Transportmaschine ist vorzugsweise zu einer Herstellung, Abfüllung, Verpackung und/oder Umverpackung von Lebensmitteln vorgesehen. Die Produktions- und/oder Transportmaschine kann somit zusätzlich zu der als eine planare Transportvorrichtung ausgebildeten Handhabungsvorrichtung eine Vielzahl an weiteren Vorrichtungen und/oder Einheiten aufweisen, die ein Fachmann für sinnvoll erachtet, wie beispielsweise eine Umformvorrichtung für Verpackungen, eine Schneidvorrichtung, eine Abfüllvorrichtung, eine Sterilisationsvorrichtung, eine Verschlussvorrichtung, eine Umverpackungsvorrichtung o. dgl. Mittels der erfindungsgemäßen Ausgestaltung kann vorteilhaft eine individuelle an einen Prozess der Produktions- und/oder Transportmaschine angepasste Bewegungsabfolge der als eine planare Transportvorrichtung ausgebildeten Handhabungsvorrichtung ermöglicht werden, die bedienerfreundlich anpassbar ist. Es kann vorteilhaft eine hohe Flexibilität im Hinblick auf ein Einsatzgebiet der Produktions- und/oder Transportmaschine erreicht werden.

Das erfindungsgemäße Verfahren, die erfindungsgemäße planare Transportvorrichtung und/oder die erfindungsgemäße Produktions- und/oder Transportmaschine sollen/soll hierbei nicht auf die oben beschriebene Anwendung und Ausführungsform beschränkt sein. Insbesondere können/kann das erfindungsgemäße Verfahren, die erfindungsgemäße planare Transportvorrichtung und/oder die erfindungsgemäße Produktions- und/oder Transportmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Produktions- und/oder Transportmaschine mit zumindest einer erfindungsgemäßen als eine planare Transportvorrichtung ausgebildeten Handhabungsvorrichtung in einer schematischen Darstellung,
- Fig. 2: eine Detailansicht der erfindungsgemäßen als eine planare Transportvorrichtung ausgebildeten Handhabungsvorrichtung in einer schematischen Darstellung,
- Fig. 3a: ein Bewegen eines Handhabungselements der erfindungsgemäßen als eine planare Transportvorrichtung ausgebildeten Handhabungsvorrichtung entlang eines geraden Bewegungspfads zu einem Anlernen eines Betriebsverhaltens des Handhabungselements in einer schematischen Darstellung,
- Fig. 3b: ein mittels einer Steuer- oder Regeleinheit der erfindungsgemäßen als eine planare Transportvorrichtung ausgebildeten Handhabungsvorrichtung interpolierter Bewegungspfad aus Fig. 3a in einer schematischen Darstellung,
- Fig. 4a: ein Bewegen eines Handhabungselements der erfindungsgemäßen als eine planare Transportvorrichtung ausgebildeten Handhabungsvorrichtung entlang eines bogenförmigen Bewegungspfads zu einem Anlernen eines Betriebsverhaltens des Handhabungselements in einer schematischen Darstellung,
- Fig. 4b: ein mittels der Steuer- oder Regeleinheit der erfindungsgemäßen als eine planare Transportvorrichtung ausgebildeten Handhabungsvorrichtung interpolierter Bewegungspfad aus Fig. 4a in einer schematischen Darstellung und
- Fig. 5: einen Verfahrensablauf eines erfindungsgemäßen Verfahrens zu einem Anlernen der erfindungsgemäßen als eine planare Transportvorrichtung ausgebildeten Handhabungsvorrichtung in einer schematischen Darstellung.

### Beschreibung des Ausführungsbeispiels

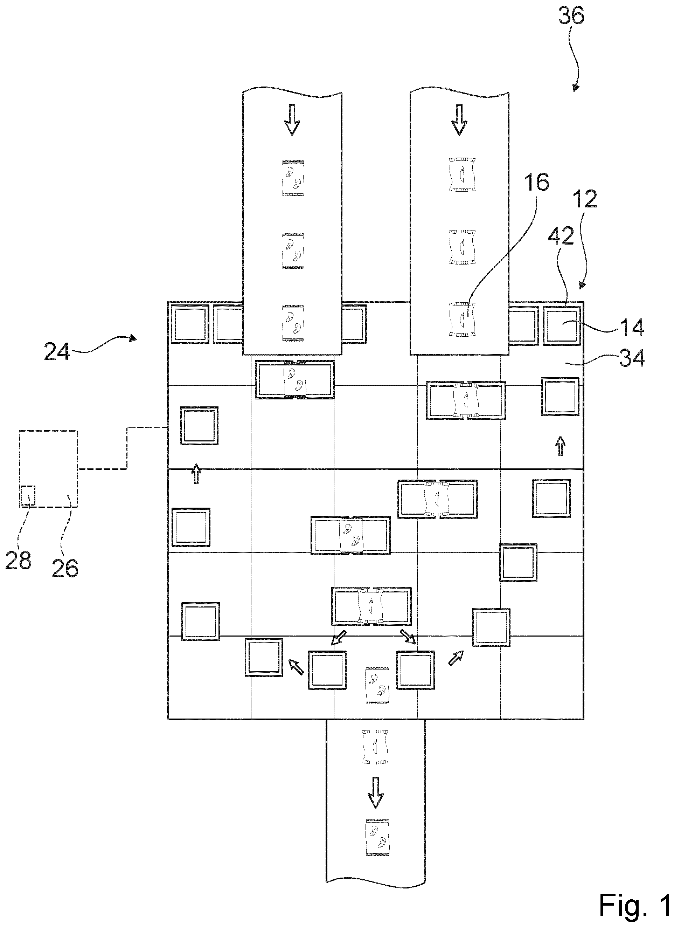

Figur 1 zeigt eine Produktions- und/oder Transportmaschine 36 mit zumindest einer Handhabungsvorrichtung 12. Die Produktions- und/oder Transportmaschine 36 ist bevorzugt zu einer Herstellung, zu einer Verarbeitung und/oder zu einem Transport von Produkten 16, insbesondere Lebensmitteln, vorgesehen. Die Produktions- und/oder Transportmaschine 36 kann beispielsweise als eine Lebensmittelverpackungsmaschine, als eine Lebensmittelabfüllmaschine, als eine Lebensmittelherstellungsmaschine, als eine Kombination der zuvor genannten Maschinen o. dgl. ausgebildet sein. Die Produktions- und/oder Transportmaschine 36 kann weitere, einem Fachmann als sinnvoll erscheinende Vorrichtungen und/oder Einheiten aufweisen, die zu einer Herstellung, Verarbeitung und/oder Transport von Produkten 16, insbesondere Lebensmitteln, Verwendung finden, wie beispielsweise eine Sterilisationsvorrichtung, eine Abfüllvorrichtung, eine Verschlussvorrichtung, eine Umverpackungsvorrichtung o. dgl. Bevorzugt ist die Handhabungsvorrichtung 12 zu einem Transport von Produkten 16 vorgesehen. Beispielsweise ist denkbar, dass die Handhabungsvorrichtung 12 zu einem Transport von Produkten 16 zwischen einzelnen Arbeitsstationen der die Handhabungsvorrichtung 12 umfassenden Produktions- und/oder Transportmaschine 36 vorgesehen ist. Die Handhabungsvorrichtung 12 kann zu einem geordneten Transport, wie beispielsweise zu einer Realisierung einer Reihenbildung, einer Sortierung o. dgl., und/oder zu einem ungeordneten Transport vorgesehen sein.

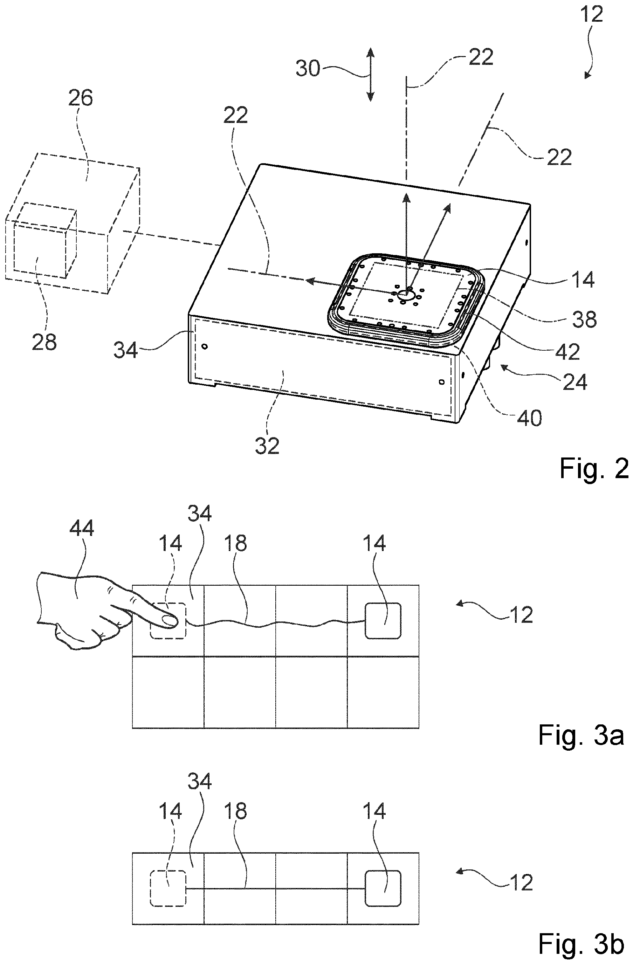

Figur 2 zeigt eine Detailansicht der Handhabungsvorrichtung 12. Die Handhabungsvorrichtung 12 ist vorzugsweise als planare Transportvorrichtung ausgebildet. Die Handhabungsvorrichtung 12 umfasst zumindest ein Handhabungselement 14, insbesondere einen elektrodynamisch beweglichen Mover, und zumindest eine Steuer- oder Regeleinheit 26, die dazu vorgesehen ist, zumindest ein Betriebsverhalten des Handhabungselements 14 mittels eines später noch näher beschriebenen Verfahrens 10 anzulernen. Die Handhabungsvorrichtung 12 umfasst vorzugsweise zumindest ein, insbesondere zumindest eine elektromagnetische Antriebseinheit 32 umfassendes, Bewegungsflächenelement 34 und zumindest eine Sensoreinheit 24 zumindest zu einer Erfassung einer Position und/oder einer Bewegung des Handhabungselements 14 relativ zum Bewegungsflächenelement 34. Besonders bevorzugt umfasst die Handhabungsvorrichtung 12 eine Vielzahl an Handhabungselementen 14 und eine Vielzahl an Bewegungsflächenelementen 34. Die Handhabungselemente 14 weisen vorzugsweise alle eine zumindest im Wesentlichen identische Ausgestaltung auf, wobei insbesondere Abweichungen zumindest in Größe und Gewichte denkbar ist. Eine Beschreibung eines der Handhabungselemente 14 ist vorzugsweise auf alle Handhabungselemente 14 übertragbar. Die Bewegungsflächenelemente 34 weisen bevorzugt alle eine zumindest im Wesentlichen identische Ausgestaltung auf, wobei insbesondere Abweichungen zumindest in Größe und Gewichte denkbar ist. Eine Beschreibung eines der Bewegungsflächenelemente 34 ist vorzugsweise auf alle Bewegungsflächenelemente 34 übertragbar. Die Bewegungsflächenelemente 34 sind miteinander verbunden, insbesondere um zusammen eine planare Bewegungsebene zu bilden (vgl. Figur 1). Die Bewegungsflächenelemente 34 weisen jeweils zumindest eine elektromagnetische Antriebseinheit 32 auf, die von zumindest einer elektrischen Spule oder mehreren elektrischen Spulen gebildet ist. Die Handhabungselemente 14 sind bevorzugt als Mover ausgebildet, die relativ zu den Bewegungsflächenelementen 34, insbesondere kontaktlos, beweglich sind, insbesondere infolge eines Zusammenwirkens von Permanentmagneten 38 der Handhabungselemente 14 mit den elektromagnetischen Antriebseinheiten 32 der Bewegungsflächenelemente 34. Vorzugsweise bilden die Permanentmagnete 38 der Handhabungselemente 14 und die elektromagnetischen Antriebseinheiten 32 zusammen eine elektrodynamische Fördereinheit oder sind zumindest Teil von der elektrodynamischen Fördereinheit. Insbesondere kann die als planare Transportvorrichtung ausgebildete Handhabungsvorrichtung 12 auf eine, einem Fachmann bereits bekannte Art und Weise eine Position der einzelnen Handhabungselemente 14 relativ zu den Bewegungsflächenelementen 34 erfassen und auswerten, um eine Steuerung oder Regelung einer Bewegung der Handhabungselemente 14 relativ zu den Bewegungsflächenelemente 34 zu realisieren. Die Handhabungselemente 14 weisen bevorzugt sechs Bewegungsfreiheitsgrade relativ zu den Bewegungsflächenelementen 34 auf. Vorzugsweise sind die Handhabungselemente 14 individuell translatorisch entlang von Koordinatenachsen X, Y und Z und individuell rotatorisch um die Koordinatenachsen X, Y und Z relativ zu den Bewegungsflächenelementen 34 bewegbar. Die Handhabungselemente 14 sind vorzugsweise alle unabhängig voneinander relativ zu den Bewegungsflächenelementen 34 bewegbar. Zu einer Steuerung oder Regelung und zu einer Überwachung der Bewegungen der Handhabungselemente 14 relativ zu den Bewegungsflächenelementen 34 weist die Handhabungsvorrichtung 12 die Sensoreinheit 24 und die Steuer- oder Regeleinheit 26 auf.

Vorzugsweise bilden die Permanentmagnete 38 der Handhabungselemente 14 zusammen mit den elektromagnetischen Antriebseinheiten 32 der Bewegungsflächenelemente 34 zumindest einen Teil der Sensoreinheit 24 der Handhabungsvorrichtung 12. Bevorzugt bildet die Steuer- oder Regeleinheit 26 einen, insbesondere weiteren Teil, der Sensoreinheit 24, insbesondere der Teil der Steuer- oder Regeleinheit 26, der eine Änderung im Magnetfeld zwischen Handhabungselementen 14 und den Bewegungsflächenelementen 34 auswertet, um eine Position der Handhabungselemente 14 relativ zu den Bewegungsflächenelementen 34 zu bestimmen. Es ist jedoch alternativ oder zusätzlich denkbar, dass die Sensoreinheit 24 vollständig von der Steuer- oder Regeleinheit 26 gebildet wird oder als separate, zusätzliche Einheit zur Steuer- oder Regeleinheit 26 vorgesehen ist. Zudem ist alternativ oder zusätzlich denkbar, dass die Sensoreinheit 24 ein Sensorelement aufweist, das zu einer speziellen Erfassung von Positionsdaten ausgebildet ist, wie beispielsweise ein Beschleunigungssensor, ein Drehratensensor o. dgl.

Die Sensoreinheit 24 umfasst vorzugsweise zumindest ein Krafterfassungselement 40, um eine auf das Handhabungselement 14 wirkende Kraft zu erfassen. Bevorzugt ist das Krafterfassungselement 40 an einem, vorzugsweise umlaufenden, Rand 42 des Handhabungselements 14 angeordnet, um bei einem Kontakt des Handhabungselements 14 mit einem Hindernis, eine auf das Handhabungselement 14 wirkende Kraft zu erfassen. Das Krafterfassungselement 40 kann jegliche, einem Fachmann als sinnvoll erscheinende Ausgestaltungen aufweisen, wie beispielsweise eine Ausgestaltung als Dehnmessstreifen, als piezoelektrischer Sensor, als Dünnfilmsensor, als induktiver Sensor, als kapazitiver Sensor o. dgl. Denkbar ist, dass der, betrachtet in der Horizontalebene, das Handhabungselement 14, insbesondere vollständig, umgebende Rand 42 des Handhabungselements 14 elastisch ausgebildet oder beweglich gelagert ist und mittels des Krafterfassungselements 40 eine, insbesondere elastische, Verformung oder eine Auslenkung des Rands 42 erfassbar ist, um eine auf das Handhabungselement 14 einwirkende Kraft zu erfassen. Weitere, einem Fachmann als sinnvoll erscheinende Ausgestaltungen zu einer Erfassung einer auf das Handhabungselement 14 wirkenden Kraft, insbesondere zu einer Hinderniserkennung, sind ebenfalls denkbar. Vorzugsweise wird eine während der, insbesondere nach einem Anlernprozess erfolgte, Bewegung des Handhabungselements 14 entlang eines Bewegungspfads 18, 20 auf das Handhabungselement 14 wirkende Kraft, insbesondere mittels der zumindest teilweise am Handhabungselement 14 angeordneten Sensoreinheit 24 der Handhabungsvorrichtung 12, erfasst, um eine Anwesenheit eines Hindernisses auf dem Bewegungspfad 18, 20 zu beurteilen, wobei bei einem Überschreiten von einem Grenzwert der auf das Handhabungselement 14 einwirkenden Kraft automatisch, insbesondere aktuelle, Positionsdaten des Handhabungselements 14 in einer Speichereinheit 28 der Steuer- oder Regeleinheit 26 der Handhabungsvorrichtung 12 hinterlegt werden, insbesondere um eine Position des Hindernisses zu vermerken.

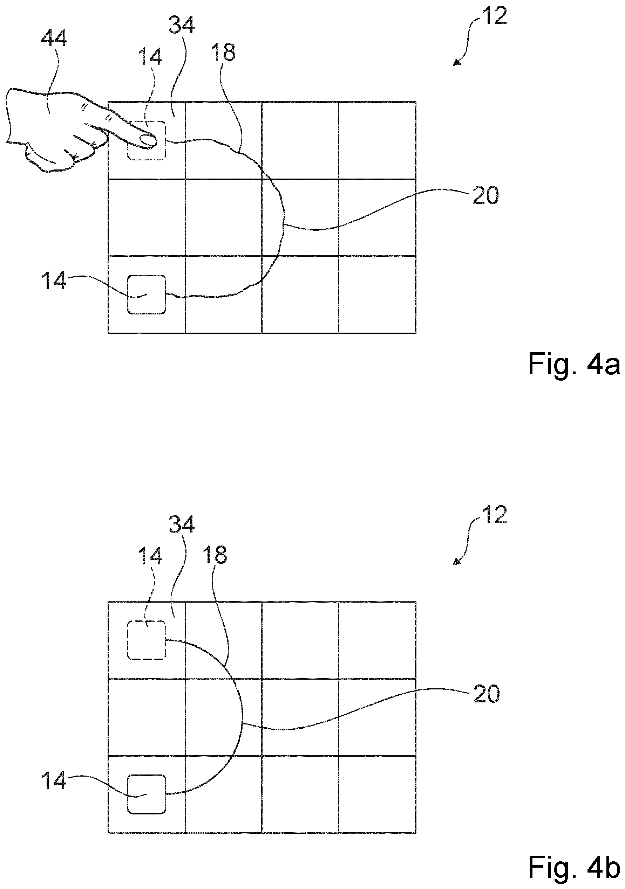

Zu einem Anlernen eines Betriebsverhaltens des Handhabungselements 14 ist das Handhabungselement 14 manuell von einem Bediener in einem Anlernprozess bewegbar. Figuren 3a und 4a zeigen Beispiele für ein Bewegen des Handhabungselements 14 entlang eines geraden und eines kurvenförmigen Bewegungspfads 18, 20 zu einem Anlernen des Betriebsverhaltens des Handhabungselements 14. Vorzugsweise wird das Handhabungselement 14 direkt durch eine Bedienerinteraktion des Bedieners bewegt, insbesondere dadurch, dass der Bediener das Handhabungselement 14 mittels einer in den Figuren 3a und 4a stark vergrößerten Extremität 44 des Bedieners, insbesondere einer Hand oder eines Fingers, bewegt, insbesondere relativ zum Bewegungsflächenelement 34. Bevorzugt ist die Bedienerinteraktion zu einer Vorgabe des Betriebsverhaltens ein Bewegen des Handhabungselements 14 relativ zu den Bewegungsflächenelementen 34 durch den Bediener, wobei der Bediener bevorzugt das Handhabungselement 14 direkt oder indirekt, insbesondere über ein Zusatzelement, berührt. Beispielsweise wird/werden, insbesondere in einem Anlernprozess, eine Bewegung und/oder ein Bewegungsablauf des Handhabungselements 14, welche/welchen das Handhabungselement 14 während eines regulären Betriebs durchführt, mittels eines aktiven Bewegens des Handhabungselements 14 durch den Bediener relativ zu den Bewegungsflächenelementen 34 angelernt. Der Bediener kann, insbesondere im Anlernprozess, beispielsweise durch ein Bewegen, insbesondere ein Schieben oder Ziehen, des Handhabungselements 14 einen Bewegungspfad 18, 20, wie dieser beispielhaft in den Figuren 3a und 4a dargestellt ist, des Handhabungselements 14 vorgeben, den das Handhabungselement 14 während eines regulären Betriebs abfährt. Beispielsweise kann der Bediener, insbesondere im Anlernprozess, durch ein Drehen des Handhabungselements 14 um eine Bewegungsachse 22 (vgl. Figur 2) eine Geschwindigkeit des Handhabungselements 14 vorgeben, mit welcher das Handhabungselement 14 während eines regulären Betriebs sich entlang des vorgegebenen Bewegungspfads 18, 20 bewegt. Es ist auch denkbar, dass durch ein, insbesondere seitliches, vorzugsweise zumindest im Wesentlichen parallel zu einer Horizontalebene und/oder einer Oberfläche des Handhabungselements 14 und/oder der Bewegungsflächenelemente 34 ausgerichtetes, Antippen des Handhabungselements 14 durch den Bediener eine Feinjustierung des Bewegungspfads 18, 20 oder der Geschwindigkeit erfolgen kann. Vorzugsweise kontaktiert der Bediener das Handhabungselement 14 direkt, um das Handhabungselement 14 zu einer Vorgabe eines Betriebsverhaltens zu bewegen, insbesondere relativ zum Bewegungsflächenelement 34 zu schieben, zu ziehen, zu drehen, anzuheben und/oder herunterzudrücken. Es ist denkbar, dass zu einem Bewegen des Handhabungselements 14 das am Handhabungselement 14 anordenbare Zusatzelement (hier nicht näher dargestellt), wie beispielsweise eine Art Griff, Führungsstange o. dgl. genutzt wird. Das Zusatzelement kann zu einem vorteilhaften Greifen und/oder Führen des Handhabungselements 14 während des Anlernprozesses genutzt werden. Bevorzugt ist das Zusatzelement in einem regulären Betrieb nicht an dem Handhabungselement 14 angeordnet. Das Handhabungselement 14 kann eine Verbindungsschnittstelle (hier nicht näher dargestellt) aufweisen, die zu einer lösbaren mechanischen Verbindung mit dem Zusatzelement vorgesehen ist. Die Verbindungsschnittstelle kann als Steckverbindung, als Schraubverbindung, als Klemmverbindung, als Klettverbindung, als Bajonettverbindung oder als sonstige, einem Fachmann als sinnvoll erscheinende Verbindungsschnittstelle ausgebildet sein. Vorzugsweise ist die Verbindungsschnittstelle frei von elektronischen und/oder elektrischen Kontakten ausgebildet. Die Verbindungsschnittstelle kann teilweise oder vollständig von einer Produktaufnahmeeinheit gebildet sein oder zusätzlich zu dieser am Handhabungselement 14 angeordnet sein. Es ist jedoch auch denkbar, dass das Zusatzelement verstaubar an dem Handhabungselement 14 angeordnet ist, wie beispielsweise infolge einer beweglichen Lagerung des Zusatzelements am Handhabungselement 14. Das Zusatzelement kann beispielsweise klappbar, schwenkbar, einfahrbar o. dgl. am Handhabungselement 14 beweglich gelagert sein. Bevorzugt wird eine als manuelles Bewegen des Handhabungselements 14 ausgebildete Bedienerinteraktion mittels der Sensoreinheit 24 der Handhabungsvorrichtung 12 erfasst, vorzugsweise interpoliert, und, insbesondere anschließend an die Interpolation, als Programmbefehl/Betriebsbefehl in der Speichereinheit 28 der Steuer- oder Regeleinheit 26 abgelegt. Figuren 3b und 4b zeigen die mittels der Steuer- oder Regeleinheit 26 interpolierten Bewegungspfade 18, 20 aus Fig. 3a und 4a.

Bevorzugt wird durch ein, insbesondere manuelles, vorzugsweise durch den Bediener durchgeführtes, Bewegen des Handhabungselements 14, insbesondere entlang einer Vertikalrichtung 30 (vgl. Figur 2), relativ zu dem, insbesondere zumindest die elektromagnetische Antriebseinheit 32 umfassenden, Bewegungsflächenelement 34 der Handhabungsvorrichtung 12 der Anlernprozess gestartet oder beendet. Die, insbesondere erfolgreich erfasste, Bedienerinteraktion zum Anlernen des Betriebsverhaltens des Handhabungselements 14 wird vorzugsweise durch das Handhabungselement 14 mittels einer optischen und/oder haptischen Ausgabe, insbesondere durch eine Bewegung, vorzugsweise ein Vibrieren, des Handhabungselements 14, bestätigt. Vorzugsweise wird ein, insbesondere manuelles, vorzugsweise durch den Bediener durchgeführtes, Bewegen des Handhabungselements 14 entlang des Bewegungspfads 18, 20 und/oder um die Bewegungsachse 22 mittels der, insbesondere zumindest teilweise an dem Handhabungselement 14 angeordneten, Sensoreinheit 24 der Handhabungsvorrichtung 12 erfasst und mittels der Steuer- oder Regeleinheit 26 der Handhabungsvorrichtung 12 in einen elektronischen Befehl umgewandelt, der als Teil eines Betriebsprogramms zu einer Steuerung oder einer Regelung des Betriebsverhaltens des Handhabungselements 14 in der Speichereinheit 28 der Steuer- oder Regeleinheit 26 gespeichert wird. Zu einer Erfassung von Positionsdaten des Handhabungselements 14, die zu einer Erfassung des Bewegungspfads 18, 20 des Handhabungselements 14 genutzt werden, wird eine Änderung in einem Magnetfeld, insbesondere in einem elektromagnetischen Feld, ausgewertet. Das, insbesondere manuelle, vorzugsweise durch den Bediener durchgeführte, Bewegen des Handhabungselements 14 entlang des Bewegungspfads 18, 20 und/oder um die Bewegungsachse 22 wird vorzugsweise mittels der, insbesondere zumindest teilweise an dem Handhabungselement 14 angeordneten, Sensoreinheit 24 der Handhabungsvorrichtung 12 erfasst und mittels der Steuer- oder Regeleinheit 26 der Handhabungsvorrichtung 12, insbesondere vor einem Speichern als Teil eines Betriebsprogramms in der Speichereinheit 28 der Steuer- oder Regeleinheit 26, interpoliert.

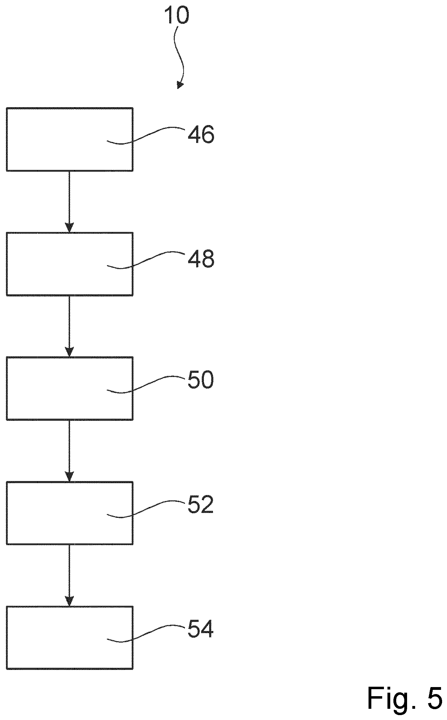

Figur 5 zeigt einen schematischen Verfahrensablauf des Verfahrens 10 zu einem Anlernen der Handhabungsvorrichtung 12, insbesondere der Handhabungselemente 14. Bei dem Verfahren 10 zu einem Anlernen der Handhabungsvorrichtung 12 wird ein Betriebsverhalten des Handhabungselements 14, das zu einem Handhaben von Produkten 16 vorgesehen ist, mittels der, insbesondere verschieden von einem manuellen Schreiben eines Programmierbefehls ausgebildeten, Bedienerinteraktion des Bedieners angelernt. Die Bedienerinteraktion erfolgt, insbesondere direkt, vorzugsweise frei von einem zusätzlichen, insbesondere elektronischen, Bedienereingabegerät, am Handhabungselement 14, um das Betriebsverhalten des Handhabungselements 14 vorzugeben. In zumindest einem Verfahrensschritt 46 des Verfahrens 10 wird der Anlernprozess gestartet, insbesondere durch das Bewegen des Handhabungselements 14 entlang der Vertikalrichtung 30 relativ zum Bewegungsflächenelement 34. Bevorzugt erfolgt in zumindest einem Verfahrensschritt 48 des Verfahrens 10 ein, insbesondere manuelles, vorzugsweise durch den Bediener durchgeführtes, Bewegen des Handhabungselements 14 entlang des Bewegungspfads 18, 20 und/oder um die Bewegungsachse 22, wobei das Bewegen mittels der Sensoreinheit 24 erfasst wird und mittels der der Steuer- oder Regeleinheit 26 verarbeitet wird. Es ist denkbar, dass die, insbesondere erfolgreich erfasste, Bedienerinteraktion, insbesondere jedes Mal, direkt durch das Handhabungselement 14 mittels einer optischen und/oder haptischen Ausgabe, insbesondere durch eine Bewegung, vorzugsweise ein Vibrieren, des Handhabungselements 14, bestätigt wird. Vorzugsweise erfolgt in zumindest einem Verfahrensschritt 50 des Verfahrens 10 eine automatische Interpolation der vorgegebenen Bewegungspfade 18, 20 mittels der Steuer- oder Regeleinheit 26. In zumindest einem Verfahrensschritt 52 des Verfahrens 10 erfolgt bevorzugt ein Feinjustieren der vorgegebenen Bewegungspfade 18, 20 oder eine Vorgabe einer Geschwindigkeit der Handhabungselemente 14, insbesondere durch eine Bedienerinteraktion oder durch eine Programmroutine. Vorzugsweise wird in zumindest einem Verfahrensschritt 54 des Verfahrens 10 der Anlernprozess beendet, insbesondere durch das Bewegen des Handhabungselements 14 entlang der Vertikalrichtung 30 relativ zum Bewegungsflächenelement 34. Das Verfahren 10 kann weitere, einem Fachmann als sinnvoll erscheinende Verfahrensschritte aufweisen, insbesondere abgeleitet anhand der Beschreibung der Funktionsweise und/oder der Ausgestaltung der Handhabungsvorrichtung 12 und/oder der Produktions- und/oder Transportmaschine 36.

## Patentansprüche

1. Verfahren zu einem Anlernen einer planaren Transportvorrichtung, wobei ein Betriebsverhalten zumindest eines als elektrodynamisch beweglicher Mover ausgebildeten Handhabungselements (14) der planaren Transportvorrichtung, das zu einem Handhaben von Produkten (16) vorgesehen ist, mittels einer, insbesondere verschieden von einem manuellen Schreiben eines Programmierbefehls ausgebildeten, Bedienerinteraktion eines Bedieners angelernt wird, **dadurch gekennzeichnet, dass** die Bedienerinteraktion direkt, vorzugsweise frei von einem zusätzlichen Bedienereingabegerät, am Handhabungselement (14) erfolgt, um das Betriebsverhalten des Handhabungselements (14) vorzugeben.

2. Verfahren nach Anspruch 1, **dadurch gekennzeichnet, dass** ein, insbesondere manuelles, vorzugsweise durch den Bediener durchgeführtes, Bewegen des Handhabungselements (14) entlang eines Bewegungspfads (18, 20) und/oder um eine Bewegungsachse (22) mittels einer, insbesondere zumindest teilweise an dem Handhabungselement (14) angeordneten, Sensoreinheit (24) der planaren Transportvorrichtung erfasst wird und mittels einer Steuer- oder Regeleinheit (26) der planaren Transportvorrichtung in einen elektronischen Befehl umgewandelt wird, der als Teil eines Betriebsprogramms zu einer Steuerung oder einer Regelung des Betriebsverhaltens des Handhabungselements (14) in einer Speichereinheit (28) der Steuer- oder Regeleinheit (26) gespeichert wird.

3. Verfahren nach Anspruch 1 oder 2, **dadurch gekennzeichnet, dass** ein, insbesondere manuelles, vorzugsweise durch den Bediener durchgeführtes, Bewegen des Handhabungselements (14) entlang eines Bewegungspfads (18, 20) und/oder um eine Bewegungsachse (22) mittels einer, insbesondere zumindest teilweise an dem Handhabungselement (14) angeordneten, Sensoreinheit (24) der planaren Transportvorrichtung erfasst wird und mittels einer Steuer- oder Regeleinheit (26) der planaren Transportvorrichtung, insbesondere vor einem Speichern als Teil eines Betriebsprogramms in einer Speichereinheit (28) der Steuer- oder Regeleinheit (26), interpoliert wird.

4. Verfahren nach einem der vorhergehenden Ansprüche, **dadurch gekennzeichnet, dass** durch ein, insbesondere manuelles, vorzugsweise durch den Bediener durchgeführtes, Bewegen des Handhabungselements (14), insbesondere entlang einer Vertikalrichtung (30), relativ zu einem, insbesondere zumindest eine elektromagnetische Antriebseinheit (32) umfassenden, Bewegungsflächenelement (34) der planaren Transportvorrichtung ein Anlernprozess gestartet oder beendet wird.

5. Verfahren nach einem der vorhergehenden Ansprüche, **dadurch gekennzeichnet, dass** zu einer Erfassung von Positionsdaten des Handhabungselements (14), die zu einer Erfassung eines Bewegungspfads (18, 20) des Handhabungselements (14) genutzt werden, eine Änderung in einem Magnetfeld, insbesondere in einem elektromagnetischen Feld, ausgewertet wird.

6. Verfahren nach einem der vorhergehenden Ansprüche, **dadurch gekennzeichnet, dass** eine während einer, insbesondere nach einem Anlernprozess erfolgte, Bewegung des Handhabungselements (14) entlang eines Bewegungspfads (18, 20) auf das Handhabungselement (14) wirkende Kraft, insbesondere mittels einer zumindest teilweise am Handhabungselement (14) angeordneten Sensoreinheit (24) der planaren Transportvorrichtung, erfasst wird, um eine Anwesenheit eines Hindernisses auf dem Bewegungspfad (18, 20) zu beurteilen, wobei bei einem Überschreiten von einem Grenzwert der auf das Handhabungselement (14) einwirkenden Kraft automatisch, insbesondere aktuelle, Positionsdaten des Handhabungselements (14) in einer Speichereinheit (28) einer Steuer- oder Regeleinheit (26) der planaren Transportvorrichtung hinterlegt werden, insbesondere um eine Position des Hindernisses zu vermerken.

7. Verfahren nach einem der vorhergehenden Ansprüche, **dadurch gekennzeichnet, dass** eine, insbesondere erfolgreich erfasste, Bedienerinteraktion zu einem Anlernen des Betriebsverhaltens des Handhabungselements (14) durch das Handhabungselement (14) mittels einer optischen und/oder haptischen Ausgabe, insbesondere durch eine Bewegung, vorzugsweise ein Vibrieren, des Handhabungselements (14), bestätigt wird.

8. Planare Transportvorrichtung mit zumindest einem als elektrodynamisch beweglicher Mover ausgebildeten Handhabungselement (14) und mit zumindest einer Steuer- oder Regeleinheit (26), die dazu vorgesehen ist, zumindest ein Betriebsverhalten des Handhabungselements (14) mittels eines Verfahrens nach einem der vorhergehenden Ansprüche anzulernen.

9. Planare Transportvorrichtung nach Anspruch 8, **gekennzeichnet durch** zumindest ein, insbesondere zumindest eine elektromagnetische Antriebseinheit (32) umfassendes, Bewegungsflächenelement (34) und zumindest eine Sensoreinheit (24) zumindest zu einer Erfassung einer Position und/oder einer Bewegung des Handhabungselements (14) relativ zum Bewegungsflächenelement (34).

10. Produktions- und/oder Transportmaschine mit zumindest einer planaren Transportvorrichtung nach Anspruch 8 oder 9.
